# EUROPEAN PATENT APPLICATION

(11) **EP 4 789 759 A1**
(43) Date of publication of application: **12.08.2026**
(21) Application number: 25156391.2
(22) Date of filing: 06.02.2025
(51) Int. Cl.: B01J 21/04, B01J 21/06, B01J 21/12, B01J 35/36, B01J 35/40, B01J 35/61, B01J 35/63, B01J 35/64, B01J 35/67

(54) **MECHANICALLY ROBUST LARGE-PORE ALUMINA-BASED CATALYST SUPPORT MATERIAL AND METHOD FOR ITS PREPARATION**

(71) Applicant: Sasol Germany GmbH, 20537 Hamburg (DE)
(72) Inventor: Ehrenberg, Kerstin, 25746 Heide (DE); Kalz, Kai Felix, 23617 Stockelsdorf (DE); Kuhn, Martin, 25541 Brunsbüttel (DE)
(74) Representative: Müller Schupfner & Partner Patent- und Rechtsanwaltspartnerschaft mbB (Hamburg)

(57) **Abstract**

The present invention relates to a method for producing a precursor alumina obtained from a mixed aqueous dispersion of at least two different boehmites having different crystallite sizes as measured along the 021 and the 020 direction. The precursor alumina so obtained may be calcined to obtain an alumina support. According to a further aspect of the invention, the alumina support may be treated with a modifying agent, dried, and calcined to obtain a modified alumina support. The modifying agent may be one or more compounds containing Si, Ti, a transition element, or a rare-earth element. A further aspect of the invention is the alumina support precursor, the alumina support, or the modified alumina support obtainable by the method described above and/or with certain characteristics.

## Description

The present invention concerns methods for producing a precursor alumina, an alumina support, and a modified alumina support. Further aspects of the invention concern an alumina support precursor, an alumina support, and a modified alumina support.

### Background art

Transition aluminas are used as carrier materials for heterogeneous catalysts. These aluminas are obtained by calcination of alumina monohydrates, like boehmite and pseudoboehmite, or of alumina trihydrates, like gibbsite or bayerite. In particular, boehmite and pseudoboehmite are obtained by precipitation of acidic and basic aluminum salts or by hydrolysis of aluminum alkoxides. The advantage of the hydrolysis of alkoxides, as described for example in DE 1258854 B, is that boehmite and pseudoboehmite with a very high purity are obtained.

When boehmites and pseudoboehmites obtained by the hydrolysis of aluminum alkoxides are calcined, transition aluminas having a mean pore radius of 2 to 4 nm may be obtained. These aluminas may be used as catalyst carriers for some catalytic reactions. However, it is particularly desirable that such aluminas are obtained with a pore volume or with pore radii in a specific range. It is particularly desirable to increase the pore volume and also to increase the pore radius while maintaining a very narrow pore radius distribution. For this reason, US 5055019 teaches ageing a boehmitic or pseudoboehmitic alumina dispersion obtained by neutral aluminum alkoxide hydrolysis in an autoclave having a steam pressure of 1 to 30 bar at a temperature of 100° to 235°C for between 0,5 and 20 hours. By this process boehmitic or pseudoboehmitic aluminas are obtained which can be calcined to transition aluminas having average pore radii in the range between 2 and 300 nm.

The manufacturing of liquid fuels from mixtures of hydrogen and carbon monoxide by the Fischer-Tropsch synthesis is a very important heterogeneously catalyzed process. As described in EP 1432778 B2 modified and unmodified SASOL products PURALOX SCCa 2/150 and SIRALOX 1,5 are preferred catalyst supports for the slurry phase process having good resistance against attrition, abrasion and dissolution. These properties can be further improved by the addition of modifying agents according to EP 2790831 B1. The average pore diameter of these catalyst carriers is in the preferred range between 10 and 15 nm.

New developments in Fischer-Tropsch catalysis require catalyst supports having larger pores while, at the same time, maintaining a high mechanical stability. For fluid bed (e.g. slurry bed) applications, good resistance against attrition is a key mechanical stability parameter. In large-pore materials cobalt crystallite sizes are usually also larger which results in a higher catalytic activity and a more favorable selectivity towards the formation of desired long-chain hydrocarbons (see for example A. Y. Khodakov, Catalysis Today 2009, 144, 251-257). Therefore, there is a need for alumina supports having larger pores. Such aluminas might be obtained using the teaching of US 5055019 A. However, these high porosity materials suffer from very low mechanical stability, in particular resistance to attrition. According to US 2006/0035783 A1 the addition of a peptizing agent might increase the attrition resistance of cobalt / alumina catalysts.

Other catalytic reactions carried out in fluid bed reactors include the oxidation of naphthalene to phthalic anhydride, the ammoxidation of isobutane to methacrylonitrile, the synthesis of maleic anhydride from naphtha cracker C₄ fraction or from n-butane, the reaction of acetylene with acetic acid to vinyl acetate, the oxychlorination of ethylene to 1,2-di-chloroethane, the chlorination of methane, the reaction of phenol with methanol to cresol and 2,6-xylenol, the reaction of methanol to gasoline, the synthesis of phthalonitrile by ammoxidation of o-xylene, the synthesis of aniline by gas-phase hydrogenation of nitrobenzene, and the low-pressure synthesis of melamine from urea.

### Objects of the invention

Many of these reactions using alumina supported catalysts, especially those involving larger molecules as reagents or products, are likely to benefit from larger pore sizes as better diffusion of such large molecules is to be expected.

There is therefore a need for alumina supports with larger pores and good resistance to attrition.

### Summary of the Invention

According to a first aspect of the invention, there is provided a method of producing an alumina support precursor comprising alumina hydrates, the method comprising at least the following steps:
providing a first boehmite having a crystallite size of between 7 and 100 nm, preferably of between 10 and 40 nm, along the 021 direction and of between 5 and 100 nm, preferably of between 5 and 40 nm, along the 020 direction;
providing a second boehmite having crystallite size below 7 nm, preferably below 5 nm, along the 021 direction and below 7 nm, preferably below 5 nm, along the 020 direction;
preparing a mixed dispersion comprising water, the first boehmite and the second boehmite, with the aluminum in the first boehmite constituting 65 to 85 wt.%, preferably 70 to 80 wt.%, of the sum of the aluminum in the first boehmite and the aluminum in the second boehmite in the mixed dispersion; and
drying the mixed dispersion to obtain the alumina support precursor.

The first boehmite and the second boehmite are characterized by the crystallite sizes along the 021 direction (perpendicular to the 021 plane) and along the 020 direction (perpendicular to the 020 plane). Boehmite with crystallite sizes equal to or smaller than 5 nm along the 020 and 021 direction may be obtained by a precipitation reaction using acidic and basic aluminum salts or preferably by the hydrolysis of aluminum alkoxides. Boehmite with larger crystallite sizes along the 020 and 021 direction may be obtained by hydrothermal ageing, for example as taught in US 5055019 or EP 1025045 B1.

Following drying and calcination in air of the first boehmite, the resulting solid preferably has an Al₂O₃ content higher than 99.9 wt.%, more preferably higher than 99.99 wt.%. Following drying and calcination in air of the second boehmite, the resulting solid preferably has an Al₂O₃ content higher than 99.9 wt.%, more preferably higher than 99.99 wt.%.

Preferably, the pH of the mixed dispersion is adjusted to values between 6 and 10, preferably between 7 and 9, using a base. The pH is measured at 25 °C. The base may comprise alkali or alkali earth hydroxides, ammonia or nitrogen containing organic molecules like amines, hydroxylamines, urea or urotropine. The preferred base is ammonia.

The first boehmite may be provided as a first dispersion in water. When 100 g of the first dispersion is dried and calcined in air, between 1 and 40 g, preferably between 4 and 15 g of Al₂O₃ is obtained. Optionally, the first dispersion contains between 0.1 and 5 wt% (related to the total mass of the first dispersion) of an acid. An inorganic or an organic acid may be used, preferably nitric acid or acetic acid.

The second boehmite may be provided as a powder. When 100 g of the powder is dried and calcined in air, preferably between 65 and 85 g of Al₂O₃ is obtained. Preferably, the powder contains between 0.1 and 10 wt.-% (related to the total weight of the powder), preferably between 1 and 5 wt.-%, of an acid. An inorganic or an organic acid may be used, preferably nitric or acetic acid. The mean particle size of the powder may be between 20 and 150 µm, preferably between 50 and 100 µm.

The second boehmite may be in the form of a second dispersion in water when preparing the mixed dispersion. When 100 g of the second dispersion is dried and calcined, between 1 and 40 g, preferably between 10 and 20 g of Al₂O₃ is obtained. Preferably the second dispersion contains between 0.1 and 5 wt.-% (related to the total weight of the second dispersion) of an acid. An inorganic acid such as nitric acid may be used. More preferably an organic acid may be used, preferably formic acid or acetic acid. The second dispersion may be wet-milled, and is preferably ball-milled as part of its preparation. Preferably the boehmite is well dispersed in the second dispersion. Addition of acids and wet-milling assists with the preparation of the second dispersion. The D50 value of the particle size distribution in the second dispersion may be between 30 and 5000 nm, preferably between 300 and 3000 nm. The D90 value of the particle size distribution in the second dispersion may be between 1000 nm and 20000 nm, preferably between 5000 and 12000 nm. By D50 and D90 are meant points in the particle size distribution obtained by laser diffraction measurements up to and including which 50% and, respectively, 90% of the total volume of the sample are contained.

Preparing the mixed dispersion may include mixing, preferably with stirrers of any shape, static mixers or screws.

The drying of the mixed dispersion may be performed using any kind of drying method, preferably contact or spray-drying, and most preferably spray-drying. The outlet temperature from the spray-drying may be between 90 and 140 °C, preferably between 100 and 120 °C.

The alumina precursor may be classified to obtain a fraction of particle sizes between 45 and 150 µm. For this classification step a sieving apparatus or an air classifier may be used.

According to a second aspect of the invention, there is provided a method of producing an alumina support, the method including:
providing an alumina support precursor produced according the first aspect of the invention or performing the method hereinbefore described to produce the alumina support precursor; and
calcining the alumina support precursor at temperatures between 500 and 1400 °C, preferably between 600 and 1000 °C, for periods between 1 minute and 6 hours, preferably between 2 and 4 hours, to obtain the alumina support.

The calcination of the alumina support precursor may proceed batchwise using a muffle furnace or continuously in a rotary kiln.

According to a third aspect of the invention, there is provided a method of producing a modified alumina support, the method including:
providing an alumina support produced according to the second aspect of the invention or performing the method hereinbefore described to produce the alumina support;
modifying the alumina support by treatment with a modifying agent to form a treated alumina support;
drying the treated alumina support; and
calcining the dried treated alumina support at temperatures between 500 and 1400 °C, preferably between 600 and 1000 °C, for periods between 1 minute and 6 hours, preferably between 2 and 4 hours, to obtain the modified alumina support.

The modifying agent preferably comprises at least one compound containing Si, Ti, a transition element or a rare-earth element, more preferably a compound containing Si, and most preferably silicic acid. The modified alumina support may have a combined content of SiO₂ and/or TiO₂ of between 0.5 and 25 wt.% relative to the weight of the modified alumina support, preferably between 1 and 5 wt.%.

The treatment with a modifying agent may be done by any impregnation technique, preferably by EDF (equilibrium deposition filtration).

The drying of the treated alumina support is preferably in a belt dryer at temperatures between 50 and 200 °C, preferably between 100 and 200 °C.

The calcination of the dried treated alumina support may proceed batchwise using a muffle furnace or continuously in a rotary kiln.

According to a fourth aspect of the invention there is provided an alumina support precursor comprising alumina hydrate having the following characteristics:
i. a unimodal pore diameter distribution obtained by mercury intrusion having its modal pore diameter in a diameter range between 8 and 100 nm; and
ii. a ΔD10_{hyd} value smaller than 20 µm, preferably smaller than 14 µm, and most preferably smaller than 10 µm.

Preferably, the modal pore diameter is between 15 and 40 nm. As used in this specification, a pore diameter distribution is unimodal when it has a single peak, and the pore diameter at which the peak occurs is the modal pore diameter.

Preferably the alumina support precursor has one or more, preferably all, of the following characteristics:
i. a pore volume between 0.1 and 1.2 mL/g, preferably between 0.5 and 1.0 mL/g;
ii. a surface area after calcination for 3h at 550 °C of the alumina support precursor of between 50 and 300 m²/g, preferably between 100 and 250 m²/g;
iii. a LOI of between 10 and 40 wt.%, preferably between 15 and 35wt.%; and
iv. a particle size distribution characterized by a D50 of between 10 and 200 µm, preferably between 50 and 100 µm, and a D10 of between 5 and 100 µm, preferably between 30 and 60 µm.

By ΔD10_{hyd} is meant a stability parameter of a material, calculated as set out below.

By D10 and D50 are meant points in the particle size distribution obtained by laser diffraction measurements up to and including which 10 and, respectively, 50% of the total volume of the sample are contained.

According to a fifth aspect of the invention there is provided an alumina support comprising alumina having the following characteristics:
i. a unimodal pore diameter distribution obtained by mercury intrusion having its modal pore diameter in a diameter range between 8 and 100 nm; and
ii. a ΔD10_{cal} value smaller than 20 µm, preferably smaller than 14 µm, and most preferably smaller than 10 µm.

Preferably, the modal pore diameter is between 15 and 40 nm.

Preferably the alumina support has one or more, preferably all, of the following characteristics:
i. a pore volume between 0.1 and 1.2 mL/g, preferably between 0.5 and 1.0 mL/g;
ii. a surface area of between 50 and 300 m²/g, preferably between 50 and 250 m²/g;
iii. a LOI of between 0 and 10 wt.%, preferably between 1 and 5 wt.%; and
iv. a particle size distribution characterized by a D50 of between 10 and 200 µm, preferably between 50 and 100 µm, and a D10 of between 5 and 100 µm, preferably between 30 and 60 µm.

By ΔD10_{cal} is meant a stability parameter of a material, calculated as set out below.

The alumina support may comprise Si, Ti, a transition element or a rare-earth element, preferably Si and is then called a modified alumina support.

The modified alumina support may have a combined content of SiO₂ and/or TiO₂ of between 0.1 and 25 wt.%, preferably between 3 and 15 wt.%.

The alumina support precursor, alumina support and the modified alumina support may be obtained using the methods hereinbefore described.

### Analytical Methods

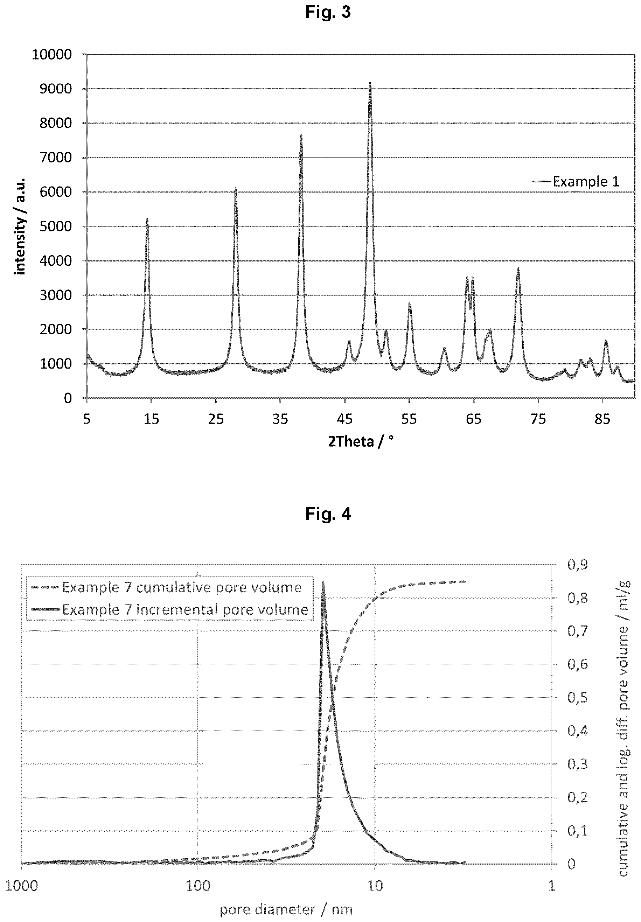

A typical X-ray diffraction pattern of a boehmite alumina is shown in Figure 3. The reflection at 2θ = 14° is dedicated to the 020 reflection and the reflection at 2θ = 28 ° is dedicated to the 021 reflection. The crystallite size along the 020 and the 021 direction is determined from line broadening according to the Scherrer formula (1): $Crystallite size = \left(K\times λ\times 57,3\right) / \left(β\times cos θ\right)$ where:

| | |
|---|---|
| K is the form factor: | 0,992 |
| λ is the X-ray wave length: | 0,154 nm |

β is the line broadening at half the maximum intensity, after subtracting the instrumental line broadening
θ is the Bragg angle

The measurements may be carried out using a Bruker CubiX³ apparatus.

The surface area is determined by nitrogen physisorption according to the BET theory based on well-described methods (IUPAC Technical Report, Pure Appl. Chem. 2015, 87, 1052-1069 and DIN ISO 9277) using for example either a Quadrasorb Si or a Quadrasorb evo instrument (Quantachrome).

The pore diameter distribution and the pore volume are determined by means of mercury intrusion based on DIN ISO 15901-1 using for example an AutoPore IV 9500 porosimeter (Micromeritics). The pore volume is calculated up to a pore diameter of 500 nm.

Particle size distribution measurements of dispersion in liquid are performed in a Cilas 1090 laser diffraction instrument (CILAS/France). For the measurement of powders, the sample is dispersed in isopropyl alcohol.

The mechanical robustness of particles, measured herein as stability parameter ΔD10, can be quantified as the difference between two particle sizes determined when atomizing the particles using compressed air at two different pressures. For this, the particle size distribution may be measured using a Malvern Mastersizer 2000 laser diffraction device equipped with a Scirocco 2000 dry dispersion unit. As previously described in the literature (see e.g. EP 2790831 B1 or M. Ali, T. Bonakdar, M. Ghadiri, A. Tinke, Powder Technology 2015, 285, 138-145), the sample is atomized into the measuring cell using compressed air. Depending on the pressure used for dispersion, the shear forces acting on the sample vary. As the pressure increases, the quantity of fine particles increases as well, and hence it is possible to observe a change in the particle size distribution. As a basis value, the particle size distribution at a pressure of 0.15 bar is measured, and the D10 value at this pressure is called D10 (0.15 bar). For alumina hydrate, the particle size distribution is then measured again at a pressure of 1.0 bar, while for calcined alumina the second particle size measurement is performed at 3.0 bar. The respective D10 values are called D10 (1.0 bar) and D10 (3.0 bar), respectively. The reason for the different pressures is that calcined materials are usually more stable and higher pressures can be applied before particle breakage or attrition is observed. The stability parameter ΔD10 is then calculated as a difference to the basis value D10 (0.15 bar). For alumina hydrate (ΔD10_{hyd}) and calcined alumina (ΔD10_{cal}) the ΔD10 values are calculated according to the following formulas: $Δ {D 10}_{hyd} = D 10 \left(0.15 bar\right) - D 10 \left(1.0 bar\right)$ $Δ {D 10}_{cal} = D 10 \left(0.15 bar\right) - D 10 \left(3.0 bar\right)$

At a pressure of 0.15 bar, usually no fragmentation of particles occurs, and this is why particle sizes recorded at this pressure typically correspond very well to particle size distributions obtained by other methods, e.g. by using the laser diffraction method described above. However, in certain cases, the D10 (0.15 bar) value is lower than the D10 value measured by liquid dispersion methods. In those cases, the particles are unstable and already show fragmentation at very low pressures. As this might lead to misinterpretations of the stability parameter ΔD10 (because the difference to the D10 value at higher pressures would be smaller), any material with a D10 (0.15 bar) value smaller than the D10 value obtained by the laser diffraction method described above was labeled "not stable" and no ΔD10_{hyd} or ΔD10_{cal} value is given.

The thermogravimetric determination of the loss on ignition (LOI) is carried out by heating of the sample and comparing the weight of the sample before and after. This determination may for example be done using a TGA-701 instrument from LECO. The sample is heated with a heating rate of 10 K/min up to 150 °C and then up to 950 °C with a heating rate of 20 K/min. After achieving constant weight, the sample is slowly cooled to room temperature. The LOI is then calculated using equation (2) $LOI = \left({m}_{0}-{m}_{950}\right) / {m}_{0} in %$
m₀: initial mass of the sample
m₉₅₀: mass of the sample after heating at 950°C

Elemental analysis of the samples is performed with an inductively coupled plasma optical emission spectrometer (e.g. a SPECTROBLUE from Spectro or 720-ES from Agilent). The analysis is carried out after pressure digestion in the microwave oven with addition of a mixture of nitric and phosphoric acids, and (in the case of materials produced according to the third aspect of the invention) after addition of hydrofluoric acid. Alternatively, the digestion may be carried out in a glassy carbon beaker on a magnetic stirrer hotplate at a temperature of 250 °C.

The invention will now be further described with reference to the non-limiting examples and figures in which:
Figure 1 shows the particle size distribution of Example 1 at an atomization pressure of 0.15 bar and 1.0 bar;
Figure 2 shows the pore diameter distribution and cumulative pore volume of Example 1;
Figure 3 shows the XRD pattern of Example 1;
Figure 4 shows the pore diameter distribution and cumulative pore volume of Example 7;
Figure 5 shows the pore diameter distribution and cumulative pore volume of Example 8;
Figure 6 shows the pore diameter distribution of Examples 1, 7 and 8; and
Figure 7 shows the pore diameter distribution and cumulative pore volume of Comparative Example 7.

### Examples

For convenience, the phrases "crystallite size along the 021 direction of" and "crystallite size along the 020 direction of" is below shortened to "021 =" and "020 =" respectively.

### Example 1

A first boehmite dispersion having an Al₂O₃ content of 4.9 wt% was prepared by adding DISPERAL HP14 (021 = 14.0 nm, 020 = 13.1 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was 2.3 µm and 9.5 µm respectively. The second boehmite dispersion was added to the first boehmite dispersion in a ratio of 75 wt.% aluminum of the first dispersion and 25 wt.% aluminum of the second dispersion using a propeller stirrer (speed: 80 rpm) to form a mixed dispersion. The pH value of the mixed dispersion was adjusted to 8.3 (measured at 25°C) using ammonia. This mixed dispersion was dried using a spray dryer (Niro) with an outlet temperature of 120 °C.

**Table 1: Analytical results for Example 1**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 16 | 0.76 | 213 | 49.2 | 44.7 | 4.5 | 21.5 | 74.0 | 37.1 |

| | | | | | | | | |
|---|---|---|---|---|---|---|---|---|
| Note 1: Surface area measurement performed following calcination for 3 hours at 550 °C | | | | | | | | |

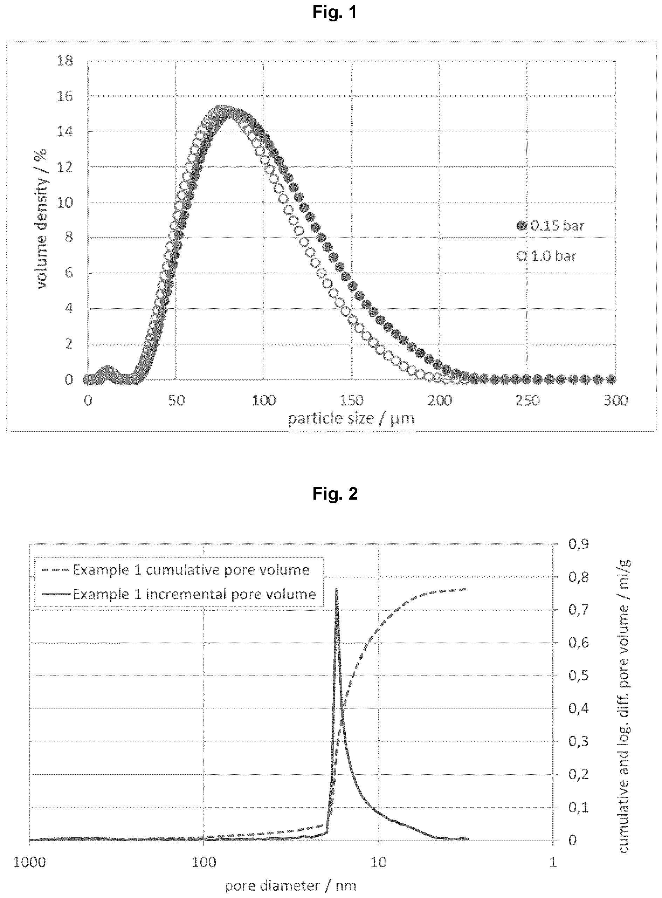

Figure 2 shows the pore diameter distribution and cumulative pore volume of Example 1. The pore diameter distribution is unimodal.

### Example 2

A first boehmite dispersion having an Al₂O₃ content of 5.1 wt% was prepared by adding DISPERAL HP30 (021 = 33.1 nm, 020 = 32.2 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 75 wt.% aluminum of the first dispersion and 25 wt.% aluminum of the second dispersion using a propeller stirrer (speed: 80 rpm) to form a mixed dispersion. The pH value of the mixed dispersion was adjusted to 8.3 (measured at 25 °C) using ammonia. This mixed dispersion was dried using a spray dryer (Niro) with an outlet temperature of 120 °C.

**Table 2: Analytical results for Example 2.**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 40 | 0.75 | 131 | 40.8 | 27.3 | 13.5 | 20.2 | 57.3 | 31.5 |

| | | | | | | | | |
|---|---|---|---|---|---|---|---|---|
| Note 1: Surface area measurement performed following calcination for 3 hours at 550 °C | | | | | | | | |

The pore diameter distribution for Example 2 is unimodal.

### Example 3

A first boehmite dispersion having an Al₂O₃ content of 9.1 wt% was prepared by adding DISPERAL S (021 = 10.1 nm, 020 = 8.3 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill.

After stirring and milling, the D50 value and the D90 value of the particle size distribution of the second boehmite dispersion was comparable to Example 1 within ±1 µm. The second boehmite dispersion was added to the first boehmite dispersion in a ratio of 75 wt.% aluminum of the first dispersion and 25 wt.% aluminum of the second dispersion using a propeller stirrer (speed: 80 rpm) to form a mixed dispersion. The pH value of the mixed dispersion was adjusted to 8.5 (measured at 25 °C) using ammonia. This mixed dispersion was dried using a spray dryer (Niro) with an outlet temperature of 120 °C.

**Table 3: Analytical results for Example 3**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 8 | 0.47 | 214 | 49.7 | 47.8 | 1.9 | 28.2 | 81.1 | 38.3 |

| | | | | | | | | |
|---|---|---|---|---|---|---|---|---|
| Note 1: Surface area measurement performed following calcination for 3 hours at 550 °C | | | | | | | | |

The pore diameter distribution for Example 3 is unimodal.

### Example 4

A first boehmite dispersion having an Al₂O₃ content of 8.6 wt% was prepared by adding PURAL 200 (021 = 39.7 nm, 020 = 30.4 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 75 wt.% aluminum of the first dispersion and 25 wt.% aluminum of the second dispersion using a propeller stirrer (speed: 80 rpm) to form a mixed dispersion. The pH value of the mixed dispersion was adjusted to 8.2 (measured at 25 °C) using ammonia. This mixed dispersion was dried using a spray dryer (Niro) with an outlet temperature of 120 °C.

**Table 4: Analytical results for Example 4**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 23 | 0.47 | 147 | 42.6 | 39.9 | 2.7 | 23.0 | 70.2 | 33.9 |

| | | | | | | | | |
|---|---|---|---|---|---|---|---|---|
| Note 1: Surface area measurement performed following calcination for 3 hours at 550 °C | | | | | | | | |

The pore diameter distribution for Example 4 is unimodal.

### Example 5

A first boehmite dispersion having an Al₂O₃ content of 4.9 wt% was prepared by adding DISPERAL HP14 (021 = 14.0 nm, 020 = 13.1 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 75 wt.% aluminum of the first dispersion and 25 wt.% aluminum of the second dispersion using a propeller stirrer (speed: 80 rpm) to form a mixed dispersion. This mixed dispersion was dried using a spray dryer (Niro) with an outlet temperature of 120 °C.

**Table 5: Analytical results for Example 5**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 12 | 0.64 | 193 | 43.7 | 34.5 | 9.2 | 22.1 | 66.4 | 33.1 |

| | | | | | | | | |
|---|---|---|---|---|---|---|---|---|
| Note 1: Surface area measurement performed following calcination for 3 hours at 550 °C | | | | | | | | |

The pore diameter distribution for Example 5 is unimodal. Example 5 was prepared according to Example 1 without adjustment of the pH value of the mixed dispersion to 7 - 9 using ammonia.

### Example 6

A first boehmite dispersion having an Al₂O₃ content of 5.1 wt% was prepared by adding DISPERAL HP14 (021 = 14.0 nm, 020 = 13.1 nm) in water with stirring. A second boehmite dispersion having an Al₂O₃ content of 15 wt% wasprepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 75 wt.% aluminum of the first dispersion and 25 wt.% aluminum of the second dispersion using a propeller stirrer (speed: 80 rpm) to form a mixed dispersion. The pH value of the mixed dispersion was adjusted to 8.3 (measured at 25 °C) using sodium hydroxide solution. This mixed dispersion was dried using a spray drier (Niro) with an outlet temperature of 120 °C.

**Table 6: Analytical results for Example 6**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 17 | 0.80 | 198 | 47.3 | 38.6 | 8.8 | 28.4 | 79.2 | 37.1 |

| | | | | | | | | |
|---|---|---|---|---|---|---|---|---|
| Note 1: Surface area measurement performed following calcination for 3 hours at 550 °C | | | | | | | | |

The pore diameter distribution for Example 2 is unimodal. Example 6 was prepared according to Example 1 using sodium hydroxide solution instead of ammonia to adjust the pH value to 7 - 9.

### Example 7

A first boehmite dispersion having an Al₂O₃ content of 4.9 wt% was prepared by adding DISPERAL HP14 (021 = 14.0 nm, 020 = 13.1 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill.

After stirring and milling, the D50 value and the D90 value of the particle size distribution of the second boehmite dispersion was comparable to Example 1 within ±1 µm. The second boehmite dispersion was added to the first boehmite dispersion in a ratio of 85 wt.% aluminum of the first dispersion and 15 wt.% aluminum of the second dispersion using a propeller stirrer (speed: 80 rpm) to form a mixed dispersion. The pH value of the mixed dispersion was adjusted to 8.3 (measured at 25 °C) using ammonia. This mixed dispersion was dried using a spray dryer (Niro) with an outlet temperature of 120 °C.

**Table 7: Analytical results for Example 7**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 18 | 0.84 | 181 | 49.9 | 28.3 | 18.6 | 22.3 | 72.2 | 37.2 |

| | | | | | | | | |
|---|---|---|---|---|---|---|---|---|
| Note 1: Surface area measurement performed following calcination for 3 hours at 550 °C | | | | | | | | |

Figure 4 shows the pore diameter distribution and cumulative pore volume of Example 7. The pore diameter distribution is unimodal. Example 7 was prepared according to Example 1 with the amount of aluminum from the second boehmite in the mixed dispersion reduced to 15 wt. %.

### Example 8

A first boehmite dispersion having an Al₂O₃ content of 4.9 wt% was prepared by adding DISPERAL HP14 (021 = 14.0 nm, 020 = 13.1 nm) in water with stirring. A second boehmite dispersion having an Al₂O₃ content of 15 wt% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 65 wt.% aluminum of the first dispersion and 35 wt.% aluminum of the second dispersion using a propeller stirrer (speed: 80 rpm) to form a mixed dispersion. The pH value of the mixed dispersion was adjusted to 8.3 (measured at 25 °C) using ammonia. This mixed dispersion was dried using a spray dryer (Niro) with an outlet temperature of 120 °C.

**Table 8: Analytical results for Example 8**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 16 | 0.73 | 198 | 50.0 | 45.5 | 4.5 | 29.0 | 81.2 | 39.1 |

| | | | | | | | | |
|---|---|---|---|---|---|---|---|---|
| Note 1: Surface area measurement performed following calcination for 3 hours at 550 °C | | | | | | | | |

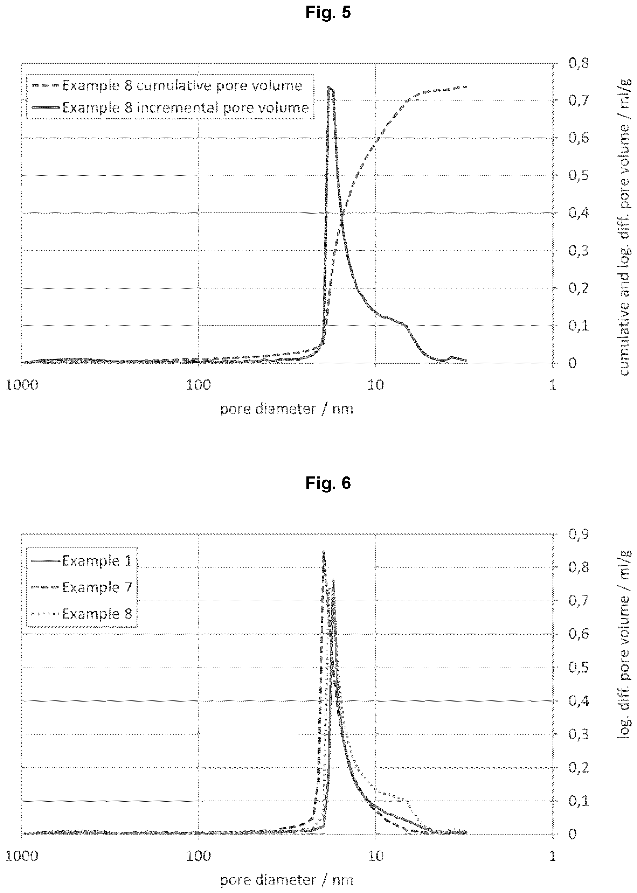

Figure 5 shows the pore diameter distribution and cumulative pore volume of Example 8. The pore diameter distribution is unimodal. Example 8 was prepared according to Example 1 with the amount of aluminum from the second boehmite in the mixed dispersion increased to 35 wt.%.

The pore diameter distributions of Example 1, 7 and 8 shown in Figure 6 verify a unimodal pore diameter distribution when the aluminum from the second boehmite is between 15 wt.% to 35 wt.% of the aluminum in the mixed dispersion.

### Comparative Example 1

A boehmite dispersion having an Al₂O₃ content of 8.7 wt% was prepared by adding PURAL SD65 (021 = 6.5 nm, 020 = 5.1 nm) in water with stirring. This dispersion was dried using a spray drier (Niro) with an outlet temperature of 120 °C.

**Table 9: Analytical results for Comparative Example 1**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 7 | 0.51 | 237 | 51 | 41.2 | 9.8 | 20.2 | 72.8 | 37.7 |

| | | | | | | | | |
|---|---|---|---|---|---|---|---|---|
| Note 1: Surface area measurement performed following calcination for 3 hours at 550 °C | | | | | | | | |

Comparative Example 1 is the comparison to Example 1 without adding a second boehmite with small crystallites to a boehmite with large crystallites and without adjusting the pH of the boehmite dispersion using ammonia. Additionally, a boehmite with smaller crystallites than in Example 1 was used. The material that was prepared has a modal pore diameter below that targeted by this invention.

### Comparative Example 2

A boehmite dispersion having an Al₂O₃ content of 4.9 wt% was prepared by adding DISPERAL HP14 (021 = 14.0 nm, 020 = 13.1 nm) in water with stirring. This dispersion was dried using a spray dryer (Niro) with an outlet temperature of 120 °C.

**Table 10: Analytical results for Comparative Example 2**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 18 | 1.01 | 167 | 46.0 | 3.6 | 42.4 | 21.5 | 68.4 | 32.4 |

| | | | | | | | | |
|---|---|---|---|---|---|---|---|---|
| Note 1: Surface area measurement performed following calcination for 3 hours at 550 °C | | | | | | | | |

Comparative Example 2 is the comparison to Example 1 without adding a second boehmite with small crystallites to a boehmite with large crystallites and without adjusting the pH of the boehmite dispersion using ammonia. The results show that a mechanically robust material is not produced in the absence of adding second boehmite with small crystallites.

### Comparative Example 3

A boehmite dispersion having an Al₂O₃ content of 5.1 wt% was prepared by adding DISPERAL HP30 (021 = 32.2 nm, 020 = 31.3 nm) in water with stirring. This dispersion was dried using a spray drier (Niro) with an outlet temperature of 120 °C.

**Table 11: Analytical results for Comparative Example 3**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 56 | 1.03 | 109 | 18.1 | 2.1 | not stable | 18.3 | 33.2 | 61.5 |

| | | | | | | | | |
|---|---|---|---|---|---|---|---|---|
| Note 1: Surface area measurement performed following calcination for 3 hours at 550 °C | | | | | | | | |

Comparative Example 3 is the comparison to Example 2 without adding second boehmite with small crystallites to a boehmite with large crystallites and without adjusting the pH of the boehmite dispersion using ammonia. The results show that a mechanically robust material is not produced in the absence of adding a second boehmite with small crystallites.

### Comparative Example 4

A boehmite dispersion having an Al₂O₃ content of 8.7 wt% was prepared by adding DISPERAL S (021 = 10.8 nm, 020 = 7.4 nm) in water with stirring. This dispersion was dried using a spray dryer (Niro) with an outlet temperature of 120 °C.

**Table 12: Analytical results for Comparative Example 4**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 11 | 0.55 | 200 | 37.4 | 7.6 | 29.8 | 21.0 | 64.7 | 31.3 |

| | | | | | | | | |
|---|---|---|---|---|---|---|---|---|
| Note 1: Surface area measurement performed following calcination for 3 hours at 550 °C | | | | | | | | |

Comparative Example 4 is the comparison to Example 3 without adding a second boehmite with small crystallites to a boehmite with large crystallites and without adjusting the pH of the boehmite dispersion using ammonia. The results show that a mechanically robust material is not produced in the absence of adding a second boehmite with small crystallites.

### Comparative Example 5

A boehmite dispersion having an Al₂O₃ content of 4.9 wt% was prepared by adding DISPERAL HP14 (021 = 14.0 nm, 020 = 13.1 nm) in water with stirring. The pH value of the boehmite dispersion was adjusted to 5.0 (measured at 25 °C) using formic acid. This dispersion was dried using a spray drier (Niro) with an outlet temperature of 120 °C.

**Table 13: Analytical results for Comparative Example 5**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 17 | 1.0 | 173 | 47.9 | 2.6 | 45.3 | 20.0 | 41.6 | 83.3 |

| | | | | | | | | |
|---|---|---|---|---|---|---|---|---|
| Note 1: Surface area measurement performed following calcination for 3 hours at 550 °C | | | | | | | | |

Comparative Example 5 is the comparison to Example 1 without adding a second boehmite with small crystallites to a boehmite having large crystallites and without adjusting the pH of the boehmite dispersion using ammonia. The pH value was adjusted to 5 using formic acid. The results prove that addition of a peptizing agent alone (as described in US2006/0035783 A1) is not sufficient to produce a mechanically robust material.

### Comparative Example 6

A first boehmite dispersion having an Al₂O₃ content of 4.9 wt% was prepared by adding DISPERAL HP14 (021 = 14.0 nm, 020 = 13.1 nm) in water with stirring. A second boehmite dispersion having an Al₂O₃ content of 15 wt% was prepared by adding 5.5 kg DISPERAL P2 (021 = 3.7 nm, 020 < 3.0 nm, HNO3 content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 90 wt.% aluminum of the first boehmite dispersion and 10 wt.% aluminum of the second dispersion using a propeller stirrer (speed: 80 rpm) to form a mixed dispersion. The pH value of the mixed dispersion was adjusted to 8.5 (measured at 25 °C) using ammonia. This mixed dispersion was dried using a spray dryer (Niro) with an outlet temperature of 120 °C.

**Table 14: Analytical results for Comparative Example 6**

| Modal pore diam. [nm] | Pore vol. [mL/g] | Surface area^{Note1} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 19 | 0.9 | 175 | 49.7 | 13.9 | 35.8 | 21.3 | 77.3 | 40.8 |

| | | | | | | | | |
|---|---|---|---|---|---|---|---|---|
| Note 1: Surface area measurement performed following calcination for 3 hours at 550 °C | | | | | | | | |

Comparative Example 6 is the comparison to Example 1 with the ratio of aluminum from the second boehmite in the mixed dispersion reduced to 10 wt.%. The results prove that the ratio of at least 15 wt.% of aluminum from the second dispersion is necessary in the mixed dispersion to prepare a mechanically robust material.

### Comparative Example 7

A first boehmite dispersion having an Al₂O₃ content of 4.9 wt% was prepared by adding DISPERAL HP14 (021 = 14.0 nm, 020 = 13.1 nm) in water with stirring. A second boehmite dispersion having an Al₂O₃ content of 15 wt.% was prepared by adding 5.5 kg DISPERAL P2 (021 = 3.7 nm, 020 < 3.0 nm, HNO₃ content in the powder: 3.9 wt%, LOI = 18.6 %) in acidic water (5 g formic acid per kg water) with stirring for at least 1 h and additional milling with a ball mill. After stirring and milling, the D50 value and the D90 value of the particle size distribution of the second boehmite dispersion was comparable to Example 1 within ±1 µm. The second boehmite dispersion was added to the first boehmite dispersion in a ratio of 60 wt.% aluminum of the first dispersion and 40 wt.% aluminum of the second dispersion using a propeller stirrer (speed: 80 rpm) to form a mixed dispersion. The pH value of the mixed dispersion was adjusted to 8.4 (measured at 25 °C) using ammonia. This mixed dispersion was dried using a spray drier (Niro) with an outlet temperature of 120 °C.

**Table 15: Analytical results for Comparative Example 7**

| Modal pore diam. [nm] | Pore vol. [mL/g] | Surface area^{Note2} [m²/g] | Stability parameter | | | LOI [%] | Particle size | |
|---|---|---|---|---|---|---|---|---|
| | | | D10 (0.15 bar) [µm] | D10 (1.0 bar) [µm] | ΔD10_{hyd} [µm] | | D50 [µm] | D10 [µm] |
| 14^{Note1} | 0.67 | 231 | 57.5 | 55.5 | 2.0 | 27.9 | 87.4 | 43.9 |

| | | | | | | | | |
|---|---|---|---|---|---|---|---|---|
| *Note 1: bimodal pore size distribution; second peak at 6 nm Note 2: Surface area measurement performed following calcination for 3 hours at 550 °C | | | | | | | | |

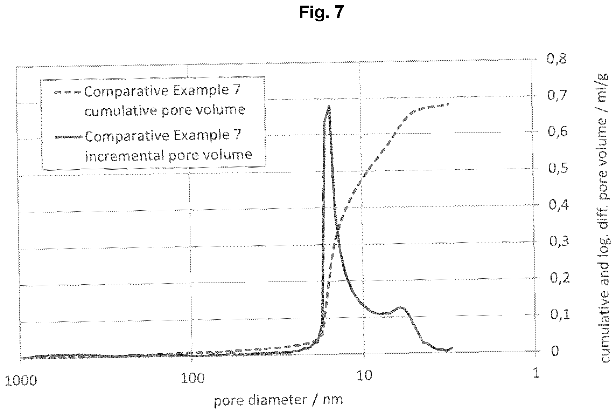

Figure 7 shows the pore diameter distribution and cumulative pore volume of Comparative Example 7. The pore diameter distribution is bimodal. Comparative Example 7 is the comparison to Example 1 with a ratio of aluminum from the second boehmite in the mixed dispersion increased to 40 wt.%. The material from Comparative Example 7 shows a stability comparable to the material obtained from Example 1. However, a bimodal pore diameter distribution is observed.

### Example 9

The material produced in Example 1 was classified to obtain a fraction between 45 and 150 µm using a sieve. The classified material was calcined for 3 h at 950°C in a kiln. The calcined material was again classified to reduce the content of particles < 45 µm using a sieve.

**Table 16: Analytical results for Example 9**

| Modal pore diam. [nm] | Pore vol. [mL/g] | Surface area [m²/g] | Stability parameter | | | LOI [%] | Particle size | |
|---|---|---|---|---|---|---|---|---|
| | | | D10 (0.15 bar) [µm] | D10 (3.0 bar) [µm] | ΔD10_{caι} [µm] | | D50 [µm] | D10 [µm] |
| 22.4 | 0.79 | 98 | 55.0 | 44.6 | 10.4 | 2.5 | 66.5 | 42.9 |

### Comparative Example 8

The material from Comparative Example 2 was classified to obtain a fraction between 45 and 150 µm using a sieve. The classified material was calcined for 3 h at 950°C in a kiln. The calcined material was again classified to reduce the content of particles < 45 µm using a sieve.

**Table 17: Analytical results for Comparative Example 8**

| Modal pore diam. [nm] | Pore vol. [mL/g] | Surface area [m²/g] | Stability parameter | | | LOI [%] | Particle size | |
|---|---|---|---|---|---|---|---|---|
| | | | D10 (0.15 bar) [µm] | D10 (3.0 bar) [µm] | ΔD10_{cal} [µm] | | D50 [µm] | D10 [µm] |
| 25 | 1.02 | 100 | 54.5 | 3.9 | 50.6 | 4.7 | 72.8 | 46.0 |

### Example 10

Following the procedure disclosed in EP 1432778 B2, a 45 wt.% dispersion of the calcined material from Example 9 in water was prepared and the appropriate amount of orthosilicic acid (1.0% SiO₂, obtained from ion-exchanged sodium silicate solution) was added to obtain a target SiO₂ loading of 2.0%. The mixture was stirred at 50 °C (200-300 rpm) for 3 h before filtration. The obtained powder was dried overnight at 120 °C and subsequently calcined for 1 h at 650 °C.

**Table 18: Analytical results for Example 10**

| SiO₂ [%] | Modal pore diam. [nm] | Pore vol. [mL/g] | Surfac e area [m²/g] | Stability parameter | | | LOI [%] | Particle size | |
|---|---|---|---|---|---|---|---|---|---|
| | | | | D10 (0.15 bar) [µm] | D10 (3.0 bar) [µm] | ΔD10_{caι} [µm] | | D50 [µm] | D10 [µm] |
| 1.9 | 22 | 0.71 | 104 | 54.9 | 48.3 | 6.6 | 5.2 | 69.0 | 44.5 |

### Example 11

Calcined material from Example 9 was treated as described in Example 10, but the target loading was 12% SiO₂.

**Table 19: Analytical results for Example 11**

| SiO₂ [%] | Modal pore diam. [nm] | Pore vol. [mL/g] | Surfac e area [m²/g] | Stability parameter | | | LOI [%] | Particle size | |
|---|---|---|---|---|---|---|---|---|---|
| | | | | D10 (0.15 bar) [µm] | D10 (3.0 bar) [µm] | ΔD10_{caι} [µm] | | D50 [µm] | D10 [µm] |
| 11.8 | 19 | 0.59 | 112 | 55.3 | 48.2 | 7.1 | 4.0 | 68.4 | 44.1 |

## Claims

1. A method of producing an alumina support precursor comprising alumina hydrates, the method comprising at least the following steps:
providing a first boehmite having a crystallite size along the 021 direction of between 7 and 100 nm, preferably of between 10 and 40 nm, and a crystallite size along the 020 direction of between 5 and 100 nm, preferably of between 5 and 40 nm;
providing a second boehmite having a crystallite size along each of the 021 direction and the 020 direction of below 7 nm, preferably below 5 nm;
preparing a mixed dispersion comprising water, the first boehmite and the second boehmite, with the aluminum in the first boehmite constituting 65 to 85 wt.-%, preferably 70 to 80 wt.-%, of the sum of the aluminum in the first boehmite and the aluminum in the second boehmite in the mixed dispersion; and
drying the mixed dispersion to obtain the alumina support precursor.

2. The method of claim 1 further comprising adjusting the pH of the mixed dispersion to values of between 6 and 10, preferably of between 7 and 9, by including a base in the mixed dispersion.

3. The method of claim 2 in which the base comprises ammonia.

4. The method of any one of claims 1 to 3 in which the first boehmite is provided dispersed in water to form a first dispersion, wherein when 100 g of the first dispersion is dried and calcined in air, between 1 and 40 g, preferably between 4 and 15 g of Al₂O₃ is obtained.

5. The method of any one of claims 1 to 4 in which the second boehmite is provided as a powder.

6. The method of any one of claims 1 to 4 in which the second boehmite is provided as a dispersion in water to form a second dispersion, wherein when 100 g of the second dispersion is dried and calcined in air, between 1 and 40 g, preferably between 10 and 20 g of Al₂O₃ is obtained, the second dispersion further containing between 0.1 and 5 wt.-% of an acid, preferably an organic acid, more preferably formic acid or acetic acid.

7. The method of claim 6 which includes wet-milling the second dispersion as part of its preparation, preferably by ball-milling.

8. The method of claim 6 or claim 7 in which the particle size distribution in the second dispersion has a D50 value of between 30 and 5000 nm, preferably between 300 and 3000 nm, and a D90 value of between 1000 nm and 20000 nm, preferably between 5000 and 12000 nm.

9. A method of producing an alumina support, the method comprising at least the following steps:
the steps according to the method of any one of claims 1 to 8 to obtain the alumina support precursor; and
calcining the alumina support precursor at temperatures between 500 and 1400 °C, preferably between 600 and 1000 °C, for periods between 1 minute and 6 hours, preferably between 2 and 4 hours, to obtain the alumina support.

10. A method of producing a modified alumina support, the method comprising at least the following steps:
the steps according to the method of claim 9 to obtain the alumina support;
modifying the alumina support by treatment with a modifying agent to form a treated alumina support;
drying the treated alumina support to form a dried alumina support; and
calcining the dried alumina support at temperatures between 500 and 1400 °C, preferably between 600 and 1000 °C, for periods between 1 minute and 6 hours, preferably between 2 and 4 hours, to obtain the modified alumina support.

11. The method of claim 10 in which the modifying agent comprises at least one compound containing Si, Ti, a transition element or a rare-earth element, preferably a compound containing Si, most preferably silicic acid.

12. The method of claim 10 or claim 11 in which the treatment with the modifying agent is performed by an impregnation technique, preferably equilibrium deposition filtration.

13. An alumina support precursor comprising alumina hydrate having the following characteristics:
i) a unimodal pore diameter distribution obtained by mercury intrusion having its modal pore diameter between 8 and 100 nm; and
ii) a ΔD10_{hyd} value smaller than 20 µm, preferably smaller than 14 µm, and most preferably smaller than 10 µm.

14. The alumina support precursor of claim 13 in which the modal pore diameter is between 15 and 40 nm.

15. The alumina support precursor of claim 13 or claim 14 having one or more, preferably all, of the following characteristics:
i) a pore volume of between 0.1 and 1.2 mL/g, preferably between 0.5 and 1.0 mL/g;
ii) a surface area after calcination of the alumina support precursor for 3h at 550 °C of between 50 and 300 m²/g, preferably between 100 and 250 m²/g;
iii) a LOI of between 10 and 40 wt.%, preferably of between 15 and 35wt.%; and
iv) a particle size distribution **characterized by** a D50 of between 10 and 200 µm, preferably of between 50 and 100 µm, and a D10 of between 5 and 100 µm, preferably of between 30 and 60 µm.

16. An alumina support comprising alumina having the following characteristics:
i) a unimodal pore diameter distribution obtained by mercury intrusion having its modal pore diameter between 8 and 100 nm; and
ii) a ΔD10_{cal} value smaller than 20 µm, preferably smaller than 14 µm, and most preferably smaller than 10 µm.

17. The alumina support of claim 16 in which the modal pore diameter is between 15 and 40 nm.

18. The alumina support of claim 16 or claim 17 having one or more, preferably all, of the following characteristics:
i) a pore volume of between 0.1 and 1.2 mL/g, preferably of between 0.5 and 1.0 mL/g;
ii) a surface area of between 20 and 300 m²/g, preferably of between 50 and 250 m²/g;
iii) a LOI of between 0 and 10 wt.%, preferably of between 1 and 5 wt.%; and
iv) a particle size distribution **characterized by** a D50 of between 10 and 200 µm, preferably of between 50 and 100 µm, and a D10 of between 5 and 100 µm, preferably of between 30 and 60 µm.

19. A modified alumina support having the characteristics of any one of claims 16 to 18 and comprising Si, Ti, a transition element or a rare-earth element, preferably Si.

20. The modified alumina support of claim 19 which has a content of SiO₂ and/or TiO₂, either individually or combined, of between 0.1 and 25 wt.%, preferably of between 3 and 15 wt.%.
